# EUROPÄISCHE PATENTANMELDUNG

(11) **EP 1 900 464 A1**
(43) Veröffentlichungstag der Anmeldung: **19.03.2008**
(21) Anmeldenummer: 06019477.6
(22) Anmeldetag: 18.09.2006
(51) Int. Cl.: B23B 31/16

(54) **Spanneinrichtung**

(71) Anmelder: Schunk GmbH & Co. KG Spann- und Greiftechnik, 74348 Lauffen (DE)
(72) Erfinder: Übele, André, 71546 Aspach (DE); Kleiner, Markus, 88605 Messkirch (DE)
(74) Vertreter: Paul, Dieter-Alfred

(57) **Zusammenfassung**

Die vorliegende Erfindung betrifft eine Spanneinrichtung mit einem Grundkörper (1), der eine zentrale Durchgangsbohrung (2) aufweist, und mehreren Spannbacken (7), die in Führungsnuten (6) an der vorderen Stirnseite des Grundkörpers (1) bewegbar geführt und durch die Betätigung eines Spannkolbens (8) gemeinsam verstellbar sind, wobei der Spannkolben (8) in einen im Grundkörper (1) vorgesehenen Zylinderraum (9) axial verstellbar gehalten und hydraulisch oder pneumatisch hin und her bewegbar ist, wobei der Zylinderraum (9) in einem zwischen den in die Führungsnuten (6) eingesetzten Spannbacken (7) liegenden axialen Bereich der Durchgangsbohrung (2) vorgesehen ist.

## Beschreibung

Die vorliegende Erfindung betrifft eine Spanneinrichtung mit einem Grundkörper, der eine zentrale Durchgangsbohrung aufweist, und mehreren Spannbacken, die in Führungsnuten an der vorderen Stirnseite des Grundkörpers bewegbar geführt und durch die Betätigung eines Spannkolbens gemeinsam verstellbar sind, wobei der Spannkolben in einem im Grundkörper vorgesehenen Zylinderraum axial verstellbar gehalten und hydraulisch oder pneumatisch hin und her bewegbar ist.

Kraftbetätigte Spanneinrichtungen dieser Art sind beispielsweise aus der EP 0 810 049 A1 bekannt und werden in der Praxis eingesetzt, um zu bearbeitende Bauteile an der Arbeitsspindel oder an dem Maschinentisch einer Werkzeugmaschine zu befestigen. Die herkömmlichen Spanneinrichtungen besitzen einen formsteifen Grundkörper und mehrere Spannbacken, die in Führungsnuten an einer vorderen Stirnseite des Grundkörpers bewegbar geführt und gemeinsam durch einen Spannkolben verstellbar sind (EP 0 810 049 A1). Zum Verstellen der Spannbacken wird dabei der Spannkolben von einem hydraulischen oder pneumatischen Antrieb axial verschoben, und diese Axialbewegung wird über an dem Spannkolben und den Spannbacken vorgesehene Keilnuten und damit in Eingriff befindliche Keilhaken in synchrone Bewegungen der Spannbacken umgesetzt.

Bei bekannten Spanneinrichtungen, die von der Anmelderin vertrieben werden (ROTA NCH), wird der Spannkolben pneumatisch betrieben. Hierzu ist in einer Basisplatte des Grundkörpers unterhalb der Spannbacken ein Zylinderraum ausgebildet, in welchem der Spannkolben angeordnet ist. Dabei unterteilt der Spannkolben den Zylinderraum in zwei Druckkammern, die mit einem Hydraulikmittel beaufschlagbar sind, um den Spannkolben in die eine oder in die andere Richtung zu bewegen.

Die bekannten Spanneinrichtungen haben sich in der Praxis durchaus bewährt. Die Bestrebungen gehen jedoch dahin, die Baugröße zu verringern.

Aufgabe der vorliegenden Erfindung ist es daher, eine Spanneinrichtung der eingangs genannten Art derart auszubilden, dass sie eine geringe Baugröße aufweist.

Diese Aufgabe ist erfindungsgemäß dadurch gelöst, dass der Zylinderraum in einem zwischen den in die Führungsnuten eingesetzten Spannbacken liegenden axialen Bereich der Durchgangsbohrung vorgesehen ist.

Der Erfindung liegt damit die Überlegung zu Grunde, den Zylinderraum in der Durchgangsbohrung des Grundkörpers vorzusehen, so dass unterhalb der Spannbacken Platz eingespart wird mit der Folge, dass die erfindungsgemäße Spanneinrichtung eine geringe Bauhöhe besitzen kann.

Gemäß einer bevorzugten Ausführungsform ist vorgesehen, dass der Zylinderraum zumindest bereichsweise in einem zwischen den Führungsnuten gelegenen axialen Bereich der Durchgangsbohrung ausgebildet ist. Wenn an den Spannbakken und dem Spannkolben bzw. einem vom Spannkolben beaufschlagten Betätigungselement miteinander in Eingriff stehende Keilhaken und Keilnuten ausgebildet sind, kann der Zylinderraum auch - zumindest bereichsweise - zwischen den Keilhaken und Keilnuten liegen.

In weiterer Ausgestaltung der Erfindung ist vorgesehen, dass der Zylinderraum axial von einer Lanze durchsetzt ist, welche an ihrem hinteren Ende an einem Boden des Grundkörpers fixiert ist. In diesem Fall umgibt der Spannkörper vorzugsweise die Lanze und ist an dieser axial verschiebbar geführt, wobei er den Zylinderraum axial in zwei Zylinderkammern unterteilt.

Dabei kann eine erste Zylinderkammer zwischen dem Zylinderkolben und einen Deckel, welcher an dem vorderen Ende der Lanze befestigt ist und den Zylinderraum an seinem vorderen Ende verschließt, ausgebildet sein. Durch die feste Verbindung zwischen dem Deckel und der Lanze wird die erforderliche Festigkeit für die im Betrieb auftretenden Drücke erreicht.

Der Deckel kann auch eine Zylinderwandung aufweisen, welche den Spannkolben umgibt, um die erste Zylinderkammer an ihrem Außenumfang zu begrenzen. Alternativ ist es möglich, in das vordere Ende der zylinderbohrung eine Schutzbüchse einzusetzen, welche die erste Zylinderkammer an ihrem Außenumfang begrenzt.

Die zweite Zylinderkammer des Zylinderraums kann zwischen dem Spannkolben und der Lanze ausgebildet sein. Dabei kann der Boden der zweiten Zylinderkammer von einem Bodenelement begrenzt sein, welches an der Lanze ausgebildet oder auf diese aufgesetzt ist. Dann ist zweckmäßigerweise der Spannkolben an seinem bodenseitigen Endabschnitt hülsenförmig ausgebildet und umgreift mit diesem Endabschnitt das Bodenelement und ist daran axial verschiebbar geführt. Auf diese Weise wird eine kompakte Ausbildung des Zylinderraums in der Durchgangsbohrung des Grundkörpers erreicht.

Gemäß einer weiteren Ausführungsform der Erfindung kann vorgesehen sein, dass in der Lanze ein axialer Druckmittelkanal ausgebildet ist, welcher an seinem einen Ende in die Zylinderkammer mündet und an seinem anderen, bodenseitigen Ende mit einer im Grundkörper ausgebildeten Druckmittelleitung in Verbindung steht. In ähnlicher Weise kann in der Lanze ein axialer Druckmittelkanal ausgebildet sein, welcher an seinem einen Ende in die zweite Zylinderkammer mündet und an seinem anderen, bodenseitigen Ende mit einer im Grundkörper ausgebildeten Druckmittelleitung in Verbindung steht. Diese Ausgestaltung erlaubt es, den zylinderkammern über die Lanze das Druckmittel zuzuführen, wodurch eine kompakte Anordnung erreicht wird.

Zweckmäßigerweise ist in der Druckmittelleitung für die erste und/oder zweite Zylinderkammer eine Absperreinrichtung vorgesehen, welche ein ungewolltes Abströmen von Druckmittel aus der entsprechenden Zylinderkammer verhindert. Zusätzlich kann in dem Grundkörper wenigstens ein Druckmittelspeicher vorgesehen sein, welcher unter Druck stehendes Druckmittel enthält und mit der ersten und/oder zweiten Zylinderkammer verbunden ist, um einen in der Zylinderkammer aufgebauten Druck aufrecht zu erhalten, wenn die Spanneinrichtung von einer externen Druckmittelquelle abgekoppelt ist. Diese Ausgestaltung ermöglicht es, die erfindungsgemäße Spanneinrichtung mit einem gespannten Bauteil von einer Werkzeugmaschine zu demontieren und an einer anderen Maschine wieder zu montieren, ohne dass die Gefahr besteht, dass sich das gespannte Bauteil löst.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Spanneinrichtung gemäß der vorliegenden Erfindung in perspektivischer Ansicht,
- Figur 2: die Spanneinrichtung aus Figur 1 in Draufsicht,
- Figur 3: die Spanneinrichtung aus Figur 1 in Vorderansicht,
- Figur 4: die Spanneinrichtung aus Figur 1 von unten betrachtet,
- Figur 5: die Spanneinrichtung aus Figur 1 in einer Schnittansicht in gelöstem Zustand,
- Figur 6: die Spanneinrichtung aus Figur 5 im Spannzustand,
- Figur 7: die Spanneinrichtung aus Figur 1 in einer weiteren Längsschnittansicht,
- Figur 8: eine weitere Ausführungsform einer erfindungsgemäßen Spanneinrichtung in einer Schnittansicht und
- Figur 9: die Spanneinrichtung aus Figur 8 in einer Querschnittansicht.

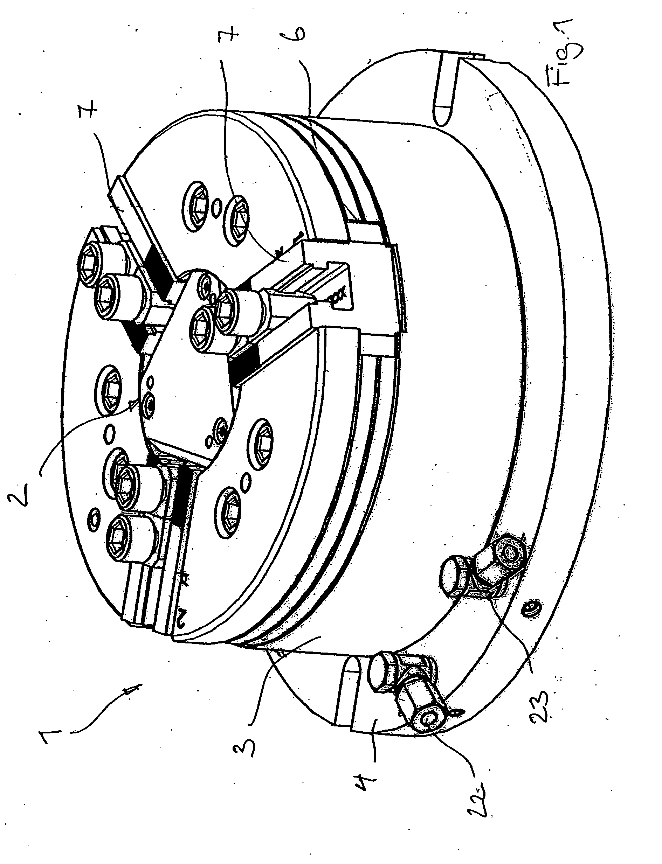

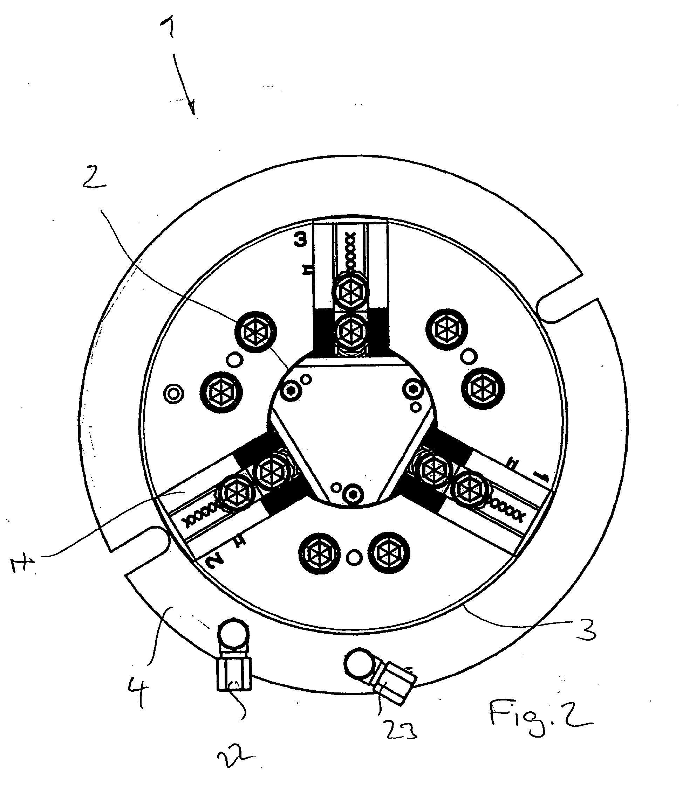

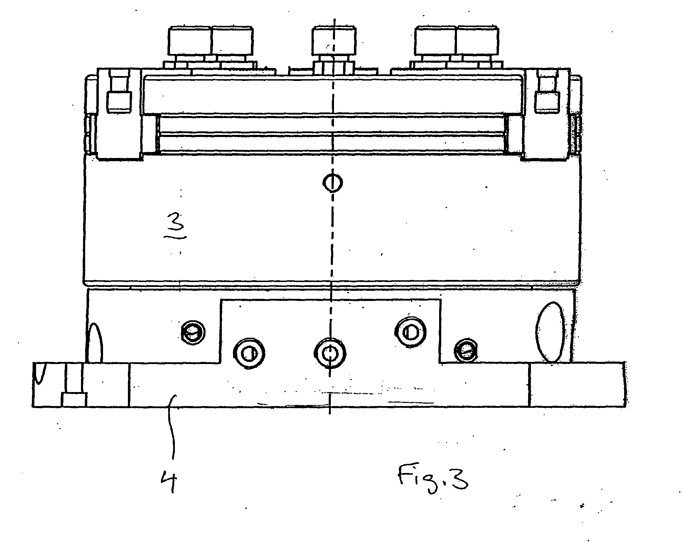

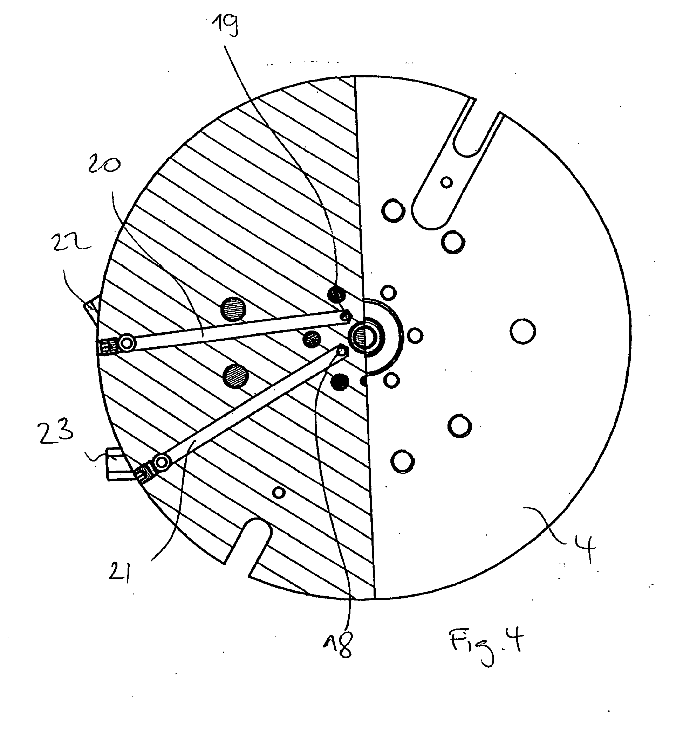

In den Figuren 1 bis 7 ist eine Spanneinrichtung gemäß der vorliegenden Erfindung dargestellt, die beispielsweise zum Spannen von Werkstücken an dem Maschinentisch einer Werkzeugmaschine eingesetzt werden kann. Zu der Spanneinrichtung gehört ein Grundkörper 1, der eine zylindrische Grundform besitzt und eine zentrale Durchgangsbohrung 2 aufweist. Der Grundkörper 1 ist in der dargestellten Ausführungsform zweiteilig ausgebildet und besitzt einen Zylinderkörper 3, der an seinem offenen, unteren bzw. rückseitigen Ende durch eine Grundplatte 4 verschlossen ist. An der Unterseite der Grundplatte 4 ist ein Einzugsbolzen 5 vorgesehen, über welchen die Spanneinrichtung an einem Maschinentisch oder dergleichen fixiert werden kann. Alternativ kann die Spanneinrichtung auch über den flanschartig über den Zylinderkörper 3 vorstehenden Teil der Grundplatte 4 an dem Maschinentisch festgespannt werden.

Die dargestellte Spanneinrichtung ist in herkömmlicher Weise als Dreibackenfutter ausgebildet. Entsprechend sind an der oberen oder vorderen Stirnseite des Grundkörpers 1 drei radiale Führungsnuten 6 vorgesehen, die gleichmäßig über den Umfang verteilt, d.h. mit jeweils 120° Versatz gegeneinander angeordnet sind. In die Führungsnuten 6 sind Spannbacken 7 eingesetzt, die jeweils aus einer Grundbacke und einer darauf festschraubbaren Aufsatzbacke bestehen. In der Zeichnung sind jeweils nur die Grundbakken der Spannbacken 7 dargestellt.

Die radiale Verstellung der Spannbacken 7 erfolgt durch einen Spannkolben 8, der Teil einer in der Durchgangsbohrung 2 des Grundkörpers 1 vorgesehenen Zylinder/Kolben-Anordnung ist. Diese Zylinder/Kolben-Anordnung definiert einen Zylinderraum 9, welcher durch den Spannkolben 8 in eine erste Zylinderkammer 10 und eine zweite Zylinderkammer 11 unterteilt ist. Konkret gehört zu der Zylinder/Kolben-Anordnung eine Lanze 12, welche an der Grundplatte 4 festgeschraubt ist und sich axial durch die Durchgangsbohrung 2 des Grundkörpers 1 erstreckt. Die Lanze trägt an ihrem vorderen, freien Ende einen Deckel 13, der mit der Lanze 12 fest verbunden ist.

Das vordere Ende der Durchgangsbohrung 2 ist durch eine Schutzbüchse 14 verschlossen, welche an dem Grundkörper 1 durch mehrere Schrauben 15 fixiert ist. Die Schutzbüchse 14 erstreckt sich in die Durchgangsbohrung 2, wobei sie den Deckel 13 umgreift und eine äußere Wandung des Zylinderraums 9 der Zylinder/Kolben-Anordnung definiert. Der Spannkolben 8 ist ebenfalls hülsenförmig ausgebildet und verschiebbar an der Lanze 12 gehalten, wobei die erste Zylinderkammer 10 zwischen der Oberseite des Spannkolbens 8, der Unterseite des Deckels 13 gebildet und außenseitig durch die Schutzbüchse 14 begrenzt wird.

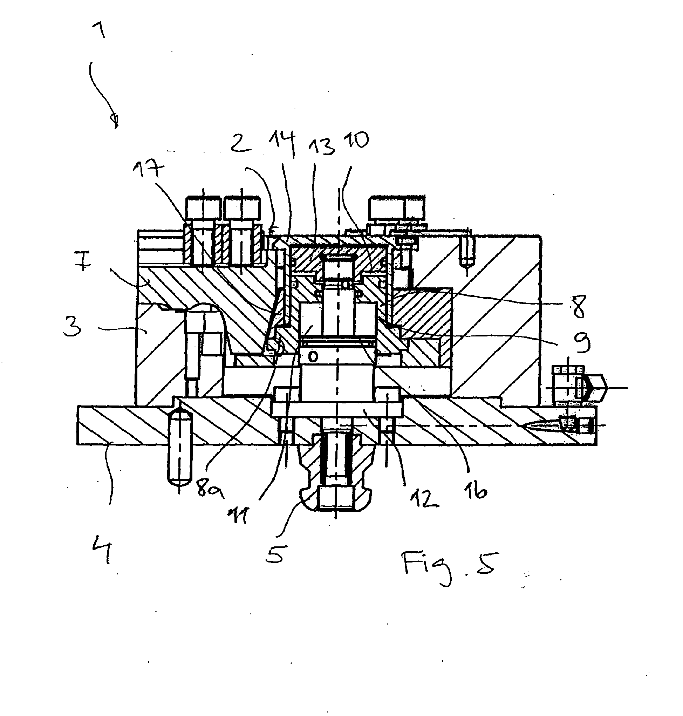

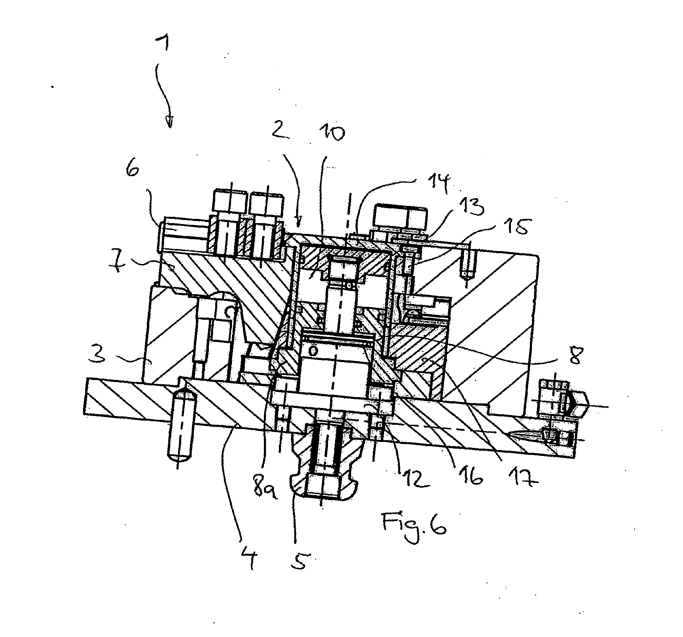

In seinem unteren Bereich umgreift der Spannkolben 8 ein Bodenelement 16, welches an der Lanze 12 ausgebildet ist, so dass die zweite Zylinderkammer 11 zwischen der Lanze 12 und dem Spannkolben 8 ausgebildet ist. Wie insbesondere die Figuren 5 und 6 gut erkennen lassen, besitzt der Spannkolben 8 an seinem unteren Ende einen nach außen vorstehenden Absatz 8a. Dieser steht in Eingriff mit einem Betätigungselement 17, das in an sich bekannter und nicht näher erläuterter Weise über Keilnuten und damit in Eingriff befindliche Keilhaken in Eingriff mit den Grundbacken steht, um eine Axialbewegung des Spannkolbens 8 in synchrone radiale Bewegungen der Spannbacken 7 umzusetzen.

Wird beispielsweise die untere, zweite Zylinderkammer 11 mit einem Druckmittel beaufschlagt, wie dies in der Figur 5 dargestellt ist, wird der Spannkolben 8 nach oben gedrückt mit der Folge, dass sich die Spannbacken 7 nach außen bewegen. Wird andererseits die obere, erste Zylinderkammer 10 mit Druckmittel beaufschlagt, wie dies in der Figur 6 gezeigt ist, wird der Spannkolben 8 und damit auch das Betätigungselement 17 nach unten bewegt, mit der Folge, dass die Spannbacken 7 durch den Eingriff der Keilhaken und Keilnuten nach innen gezogen werden.

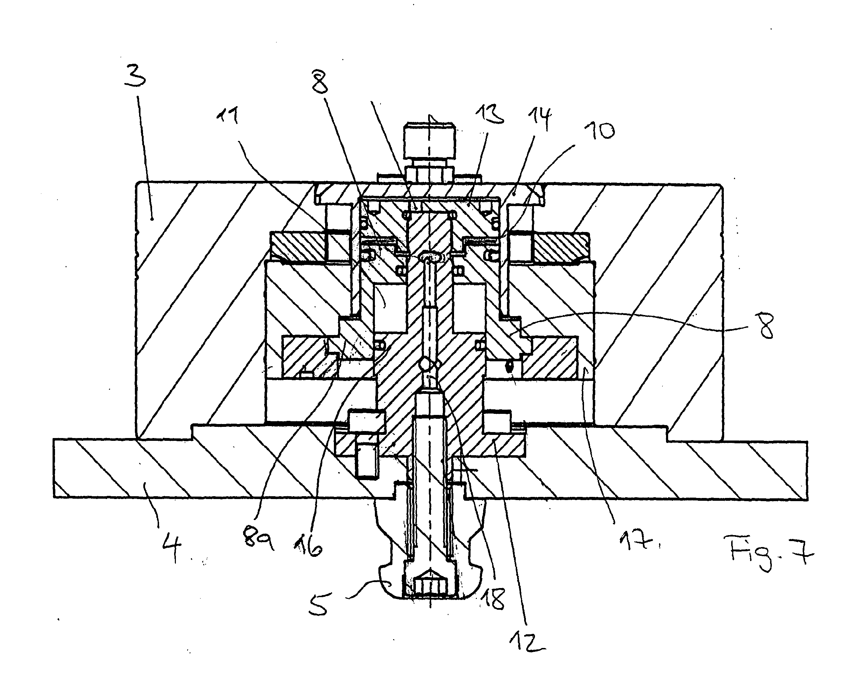

Wie in der Schnittdarstellung der Figur 7 erkennbar ist, ist zentral in der Lanze 12 ein axialer Druckmittelkanal 18 vorgesehen, über welchen die erste Zylinderkammer 10 mit Druckmittel versorgt werden kann. In entsprechender Weise ist in der Lanze 12 auch ein weiterer axialer Druckmittelkanal 19 vorgesehen, um die zweite Zylinderkammer 11 mit Druckmittel zu versorgen. Die Druckmittelkanäle 18 der Lanze 12 sind an ihren unteren Enden mit Druckmittelleitungen 20, 21 verbunden, welche in der Grundplatte 4 ausgebildet und an ihren äußeren Enden mit Druckmittelanschlüssen 22, 23 versehen sind.

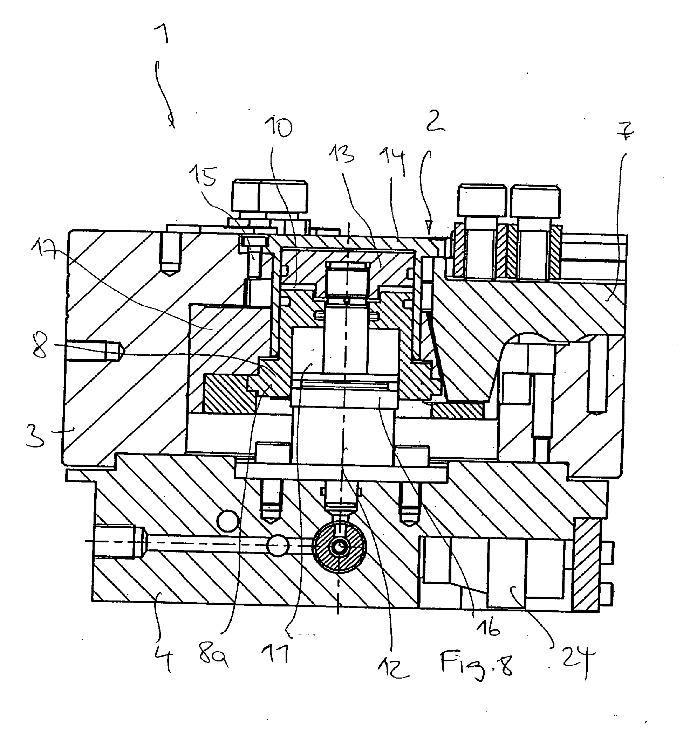

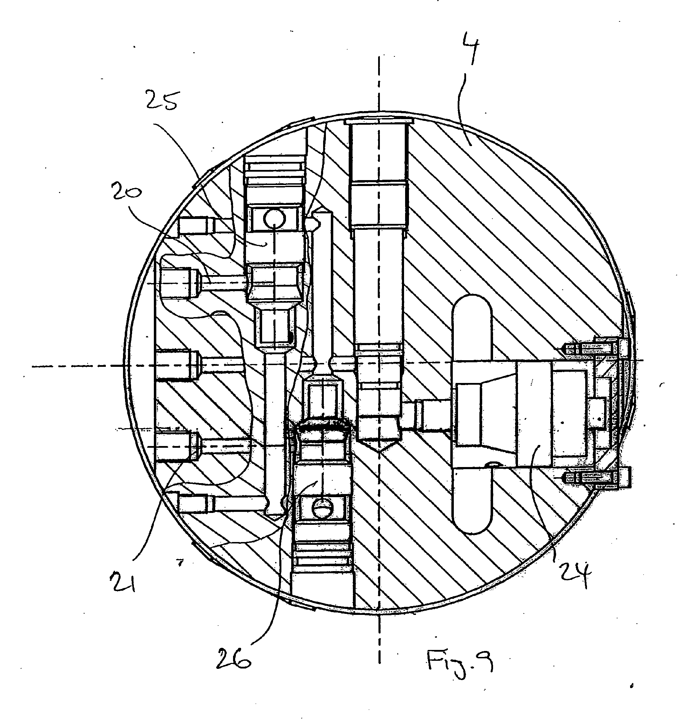

Die Figuren 8 und 9 zeigen eine alternative Ausführungsform einer erfindungsgemäßen Spanneinrichtung. Diese entspricht in ihrem Grundaufbau der zuvor anhand der Figuren 1 bis 7 erläuterten ersten Ausführungsform mit der Maßgabe, dass die Grundplatte 4 dicker ausgebildet ist. Der Grund hierfür ist, dass in der Grundplatte 4 ein Druckmittelspeicher 24 vorgesehen ist, welcher mit der ersten Zylinderkammer 10 verbunden ist, um einen in der Zylinderkammer 10 aufgebauten Druck aufrecht zu erhalten, wenn die Spanneinrichtung von einer externen Druckmittelquelle abgekoppelt ist. Des weiteren sind in der Grundplatte 4 Absperreinrichtungen 25, 26 vorgesehen, über welche die Druckmittelleitungen 20, 21 in dem Grundkörper 4 verschlossen werden können, um gegebenenfalls zu verhindern, dass Druckmittel aus den Zylinderkammern 10, 11 ungewollt austritt.

## Patentansprüche

1. Spanneinrichtung mit einem Grundkörper (1), der eine zentrale Durchgangsbohrung (2) aufweist, und mehreren Spannbacken (7), die in Führungsnuten (6) an der vorderen Stirnseite des Grundkörpers (1) bewegbar geführt und durch die Betätigung eines Spannkolbens (8) gemeinsam verstellbar sind, wobei der Spannkolben (8) in einem im Grundkörper (1) vorgesehenen Zylinderraum axial verstellbar gehalten und hydraulisch oder pneumatisch hin und her bewegbar ist, **dadurch gekennzeichnet, dass** der Zylinderraum in einem zwischen den in die Führungsnuten (6) eingesetzten Spannbacken (7) liegenden axialen Bereich der Durchgangsbohrung (2) vorgesehen ist.

2. Spanneinrichtung nach Anspruch 1, **dadurch gekennzeichnet, dass** der Zylinderraum zumindest bereichsweise in einem zwischen den Führungsnuten (6) gelegenen axialen Bereich der Durchgangsbohrung (2) ausgebildet ist.

3. Spanneinrichtung nach Anspruch 1 oder 2, **dadurch gekennzeichnet, dass** an den Spannbacken (7) und dem Spannkolben (8) oder einem vom Spannkolben beaufschlagten Betätigungselement (17) miteinander in Eingriff stehende Keilhaken und Keilnuten ausgebildet sind und der Zylinderraum zwischen den Keilhaken und/oder Keilnuten liegt.

4. Spanneinrichtung nach einem der vorherigen Ansprüche, **dadurch gekennzeichnet, dass** der Zylinderraum (9) axial von einer Lanze (12) durchsetzt ist, welche an ihrem hinteren Ende an einem Boden des Grundkörpers (1) fixiert ist.

5. Spanneinrichtung nach Anspruch 4, **dadurch gekennzeichnet, dass** der Spannkolben (8) die Lanze (12) umgibt und an dieser axial verschiebbar geführt ist.

6. Spanneinrichtung nach Anspruch 5, **dadurch gekennzeichnet, dass** der Spannkolben (8) den Zylinderraum (9) axial in zwei Zylinderkammern (10, 11) unterteilt.

7. Spanneinrichtung nach Anspruch 6, **dadurch gekennzeichnet, dass** eine erste Zylinderkammer (10) zwischen dem Zylinderkolben (8) und einem Deckel (13), welcher an dem vorderen Ende der Lanze (12) befestigt ist und den Zylinderraum an seinem vorderen Ende verschließt, ausgebildet ist.

8. Spanneinrichtung nach Anspruch 7, **dadurch gekennzeichnet, dass** in das vordere Ende der Durchgangsbohrung (2) eine Schutzbüchse (14) eingesetzt ist, welche die erste Zylinderkammer an ihrem Außenumfang begrenzt.

9. Spanneinrichtung nach einem der Ansprüche 6 bis 8, **dadurch gekennzeichnet, dass** die zweite zylinderkammer (11) des Zylinderraums (9) zwischen dem Spannkolben (8) und der Lanze (12) ausgebildet ist.

10. Spanneinrichtung nach Anspruch 9, **dadurch gekennzeichnet, dass** der Boden der zweiten Zylinderkammer (11) von einem Bodenelement (16) begrenzt ist, welches an der Lanze (12) ausgebildet oder auf diese aufgesetzt ist.

11. Spanneinrichtung nach Anspruch 10, **dadurch gekennzeichnet, dass** der Spannkolben (8) an seinem bodenseitigen Endabschnitt hülsenförmig ausgebildet ist und der Endabschnitt das Bodenelement (16) umgreift und daran axial verschiebbar geführt ist.

12. Spanneinrichtung nach einem der Ansprüche 4 bis 11, **dadurch gekennzeichnet, dass** in der Lanze (12) ein axialer Druckmittelkanal (18) ausgebildet ist, welcher an seinem einen Ende in die erste Zylinderkammer (10) mündet und an seinem anderen, bodenseitigen Ende mit einer im Grundkörper ausgebildeten Druckmittelleitung (20) in Verbindung steht.

13. Spanneinrichtung nach einem der Ansprüche 4 bis 12, **dadurch gekennzeichnet, dass** in der Lanze (12) ein axialer Druckmittelkanal ausgebildet ist, welcher an seinem einen Ende in die zweite Zylinderkammer (11) mündet und an seinem anderen, bodenseitigen Ende mit einer im Grundkörper (1) ausgebildeten Druckmittelleitung (21) in Verbindung steht.

14. Spanneinrichtung nach einem der Ansprüche 6 bis 13, **dadurch gekennzeichnet, dass** in der Druckmittelleitung (21, 22) für die erste und/oder zweite Zylinderkammer Absperreinrichtungen (25, 26) vorgesehen sind, um ein ungewolltes Abströmen von Druckmittel aus der entsprechenden Zylinderkammer (10, 11) zu verhindern.

15. Spanneinrichtung nach Anspruch 14, **dadurch gekennzeichnet, dass** in dem Grundkörper (1) wenigstens ein Druckmittelspeicher (24) vorgesehen ist, welcher mit der ersten und/oder zweiten Zylinderkammer (10) verbunden ist, um einen in der Zylinderkammer (10) aufgebauten Druck aufrecht zu erhalten, wenn die Spanneinrichtung von einer externen Druckmittelquelle abgekoppelt ist.
